# FASCICULE DE BREVET EUROPEEN

(11) **EP 2 279 906 B1**
(45) Date de publication et mention de la délivrance du brevet: **14.06.2017**
(21) Numéro de dépôt: 10170830.3
(22) Date de dépôt: 26.07.2010
(51) Int. Cl.: B60Q 1/04, F21V 29/00, F21S 8/10

(54) **Dispositif d'éclairage pour véhicule automobile**
Beleuchtungsvorrichtung für Kraftfahrzeug
Lighting device for vehicle

(30) Priorité: 30.07.2009 FR 0955336
(43) Date de publication de la demande: 02.02.2011
(73) Titulaire: Valeo Vision, 93012 Bobigny (FR)
(72) Inventeur: Bakacha, Malik, 44370, Belligné (FR); Puente, Jean-Claude, 93190, Livry Gargan (FR); Holder, Caroline, 49460, Cantenay Epinard (FR)

(56) Documents cités:
- EP-A- 1 881 262
- DE-A1- 4 401 813
- DE-A1- 19 820 420
- DE-A1-102009 015 475
- DE-B3-102006 014 519
- DE-C1- 3 903 868
- FR-A- 2 514 466
- FR-A- 2 535 437
- US-A1- 2005 002 196

## Description

L'invention concerne un dispositif d'éclairage, notamment un projecteur, pour véhicule automobile. Les documents FR2535437A1, US2005/000002196 A1, DE4401813A1 et DE19820420A1 décrivent des dispositifs d'éclairage connus, traitent des problèmes engendrés par la dilatation thermique et y apportent différentes solutions. On connaît des dispositifs d'éclairage comprenant un boîtier en plastique fixé au châssis du véhicule via des pattes de fixation du boîtier, ainsi qu'une glace et un module optique fixés chacun sur ce boîtier. Le module optique comporte une lampe, un réflecteur et une lentille de manière à émettre un faisceau lumineux devant être correctement réglé. Ce faisceau lumineux est réglé grâce à des points de réglages situés sur le boîtier.

Ainsi, le faisceau lumineux est réglé pour un agencement du module optique par rapport au boîtier et pour un agencement du boîtier par rapport au châssis du véhicule.

L'inconvénient de ces dispositifs est qu'en fonctionnement, de la chaleur est diffusée, notamment sur des zones telles que les points de réglage du faisceau lumineux, ou les pattes de fixation du boîtier sur le châssis du véhicule, ou à proximité de ceux-ci, et ces zones sont soumises à une température trop élevée, engendrant une dilatation thermique importante de celles-ci. Par conséquent, le module optique peut bouger par rapport au boîtier, et le boîtier peut bouger par rapport au châssis du véhicule, entraînant dans tous les cas un dérèglement d'une position du faisceau lumineux, et donc une modification de la coupure du faisceau.

Le réglage du faisceau lumineux fait l'objet de réglementations, notamment par un essai de stabilité de coupure qui comprend par exemple cinq cycles d'allumage d'une heure d'une position, par exemple code, du projecteur, suivi chacun d'une extinction d'une heure. L'essai de stabilité de coupure est défini en pourcentage de la stabilité de la position du faisceau lumineux, qui doit être inférieur ou égal par exemple à environ 0,1% pour le projecteur en position code, ou à environ 0,3% dans le cas d'un projecteur anti-brouillard.

La dilatation thermique des dispositifs connus ne permet pas toujours à ces dispositifs de satisfaire aux tests.

Il existe donc des problèmes de tenue du réglage de la position du faisceau lumineux dans les dispositifs d'éclairage connus.

Il existe un besoin pour remédier aux inconvénients précités.

L'invention vise à proposer un nouveau dispositif d'éclairage, notamment un projecteur, pour véhicule automobile.

La présente invention a ainsi pour objet un dispositif d'éclairage tel que défini dans la revendication 1. Grâce à l'invention, malgré la chaleur diffusée par le module optique, la dilatation thermique des interfaces est réduite pour les empêcher de se déformer jusqu'à un dérèglement de la position du faisceau, et donc de la coupure de ce faisceau.

En effet, grâce aux moyens anti-dilatation, le module optique ne peut pas bouger par rapport au boîtier, et le boîtier ne peut pas bouger par rapport au châssis du véhicule, même lors d'un essai de stabilité de coupure.

On entend par première et deuxième interfaces de montage respectivement au moins un élément du boîtier apte à coopérer avec au moins un élément du véhicule, et au moins un élément du module optique apte à coopérer avec au moins un autre élément du boîtier.

Avantageusement, le dispositif selon l'invention est dépourvu d'écran thermique distinct du réflecteur. Le dispositif est notamment dépourvu d'écran thermique entre le réflecteur et le boîtier.

Selon l'invention, les moyens agencés pour s'opposer à la dilatation thermique comportent au moins un organe de rigidification, notamment une plaque, par exemple sensiblement plane, disposé sur ou à proximité d'au moins une des interfaces de montage. L' organe de rigidification présente un coefficient de dilatation thermique sensiblement inférieur à celui d'un matériau d'un élément de l'interface.

L'un au moins du boîtier et des éléments des interfaces de montage peut être en un matériau plastique, par exemple en polypropylène, présentant un coefficient de dilatation thermique compris entre environ 0,00005/°K (5*10^-5/°K) et 0,00007/°K (7*10^-5/°K).

Le cas échéant, l'organe de rigidification peut également être un matériau plastique, par exemple en thermodur, présentant un coefficient de dilatation thermique sensiblement inférieur à celui des interfaces de montage, par exemple d'environ 0,0000015/°K (1,5*10^-6/°K).

En variante, cette plaque peut être métallique, par exemple en acier ou en aluminium, présentant respectivement un coefficient de dilatation thermique d'environ 0,000012/°K (1,2*10^-5/°K) et 0,00002/°K (2*10^-5/°K).

Par exemple, l'organe de rigidification peut être disposé à l'intérieur du boîtier, notamment posé contre une paroi intérieure.

En complément ou en variante, l'organe de rigidification peut être disposé à l'extérieur du boîtier, notamment posé sur une paroi extérieure.

L'organe de rigidification peut être agencé pour empêcher la dilatation thermique d'une seule des interfaces de montage.

De préférence, l'organe de rigidification peut s'étendre entre au moins deux points de fixation de la deuxième interface de montage, l'un au moins de ces points de fixation étant notamment réglable.

Dans ce cas, l'organe de rigidification peut comporter deux branches sensiblement perpendiculaires dirigées chacune vers un point de fixation de la deuxième interface.

Au moins un point de fixation de la deuxième interface peut être formé d'un trou apte à recevoir une vis de fixation.

L'organe de rigidification peut comporter une plaque pourvue d'au moins un orifice apte à former un passage pour la vis de fixation destinée à coopérer avec un trou configuré dans la deuxième interface de montage.

En variante, ou en complément, la plaque peut comporter un contour agencé pour entourer partiellement au moins un point de fixation de la deuxième interface de montage.

En variante, l'organe de rigidification peut être agencé, notamment en une seule pièce, pour s'opposer à la dilatation thermique des deux interfaces de montage.

De préférence, l'organe de rigidification peut s'étendre à partir de points de fixation de la deuxième interface de montage jusqu'à au moins une patte de fixation de la première interface de montage.

Si on le souhaite, l'organe de rigidification peut former au moins partiellement la première interface de montage et ainsi participer au montage du boîtier sur le véhicule, notamment sur le châssis du véhicule.

De préférence, l'organe de rigidification peut être assemblée par exemple par vissage, collage ou surmoulage sur le boîtier.

Si on le souhaite, les moyens anti-dilatation peuvent comporter un ensemble de nervures sur le boîtier à proximité d'au moins une interface de montage.

Les nervures peuvent être configurées sur au moins une des parois extérieure ou intérieure du boîtier.

De préférence, ces nervures peuvent s'étendre entre au moins deux points de fixation de la deuxième interface de montage.

De préférence encore, les nervures peuvent s'étendre au moins partiellement autour d'au moins deux points de fixation de la deuxième interface de montage.

La réalisation d'un ensemble de nervures à l'intérieur du boîtier permet avantageusement d'être proche d'un réflecteur du module optique, zone très chaude du dispositif d'éclairage.

Ces nervures peuvent avantageusement être réalisées par surmoulage avec le boîtier.

Cet ensemble de nervures peut former une structure alvéolée, autrement dit un nid d'abeilles.

Si on le souhaite, les moyens anti-dilatation peuvent comporter une zone de rigidification sur le boîtier située à proximité d'une des deux interfaces de montage, cette zone étant réalisée avec un matériau présentant un coefficient de dilatation sensiblement inférieur à celui d'un des éléments de l'interface de montage.

De préférence, la zone de rigidification peut être formée par la structure alvéolée recevant un matériau présentant un coefficient de dilatation sensiblement inférieur à celui d'un des éléments de l'interface de montage.

Le matériau reçu dans la structure alvéolée peut par exemple être injecté par expansion libre.

Selon un exemple de réalisation de l'invention, le module optique est monté sur le boîtier par l'intermédiaire d'au moins trois liaisons distinctes formant la deuxième interface.

Les emplacements de ces liaisons définissent une courbe fermée, notamment une courbe géométrique, cette courbe passant par ces emplacements et formant une zone géométrique.

Dans un exemple préféré, la deuxième interface comporte trois liaisons distinctes définissant la zone géométrique, qui est dans ce cas triangulaire, dont les sommets sont confondus avec les emplacements des liaisons.

Avantageusement, les moyens agencés pour s'opposer à une dilatation thermique s'étendent au moins partiellement dans cette zone géométrique.

Eventuellement, les moyens agencés pour s'opposer à une dilatation thermique comprennent des moyens de rigidification.

Par exemple, ces moyens de rigidification comportent une ou plusieurs nervures.

Par exemple, une ou plusieurs nervures de rigidification peuvent être formées sur le boîtier, notamment sur l'intérieur de celui-ci, au moins partiellement dans la zone géométrique précitée.

En variante, le module optique est monté sur le boîtier par l'intermédiaire de seulement deux liaisons distinctes formant la deuxième interface, lesquelles liaisons définissent un segment géométrique.

Le cas échéant, la ou les nervures de rigidification coupent le segment précité.

De préférence, cette ou ces nervures s'étendent entièrement dans la zone géométrique précitée, et par exemple, le boîtier est dépourvu de nervures de rigidification dans une zone adjacente à la zone géométrique.

Le cas échéant, le boîtier est complètement dépourvu de nervures de rigidification en dehors de la zone géométrique.

Si on le souhaite, la ou les nervures de rigidification sont réalisées d'un seul tenant, dans le même matériau que le reste du boîtier.

En variante, la ou les nervures de rigidification sont réalisées dans un matériau différent de celui du reste du boîtier.

Dans un exemple de mise en oeuvre de l'invention, les moyens de rigidification comportent un revêtement approprié déposé sur le boîtier, par exemple dans la zone géométrique précitée.

Si on le souhaite, une zone au moins du boîtier, par exemple la zone géométrique précitée, a été traitée par modification chimique de sa surface afin de rendre cette zone plus rigide qu'une zone voisine du boîtier.

Ainsi, la zone géométrique définie par les liaisons entre le module optique et le boîtier est protégée de manière satisfaisante d'éventuelles dilatations thermiques.

Bien entendu, si cela est souhaitable, il est possible d'avoir à la fois des nervures de rigidification et un traitement de la zone géométrique pour améliorer la tenue de cette zone vis-à-vis de la chaleur dégagée par le module optique.

Dans un exemple de mise en oeuvre de l'invention, le boîtier comporte, en dehors de la zone géométrique, au moins une zone de déformation qui est plus sensible à la dilatation thermique que la zone géométrique.

Par exemple, cette ou ces zones de dilatation peuvent avoir été traitées par modification chimique de sa surface pour la ou les rendre plus sensible(s) à la chaleur.

L'une des liaisons comporte par exemple une rotule permettant un pivotement du miroir du module optique par rapport au boîtier.

Dans un exemple de mise en oeuvre de l'invention, deux au moins des liaisons comportent chacune une rotule.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en perspective, une vue éclatée d'un projecteur pour véhicule automobile conforme à un mode de réalisation de l'invention,
- la figure 2 représente, schématiquement et partiellement, en vue de face, le projecteur de la figure 1 selon un premier exemple de mise en oeuvre de l'invention,

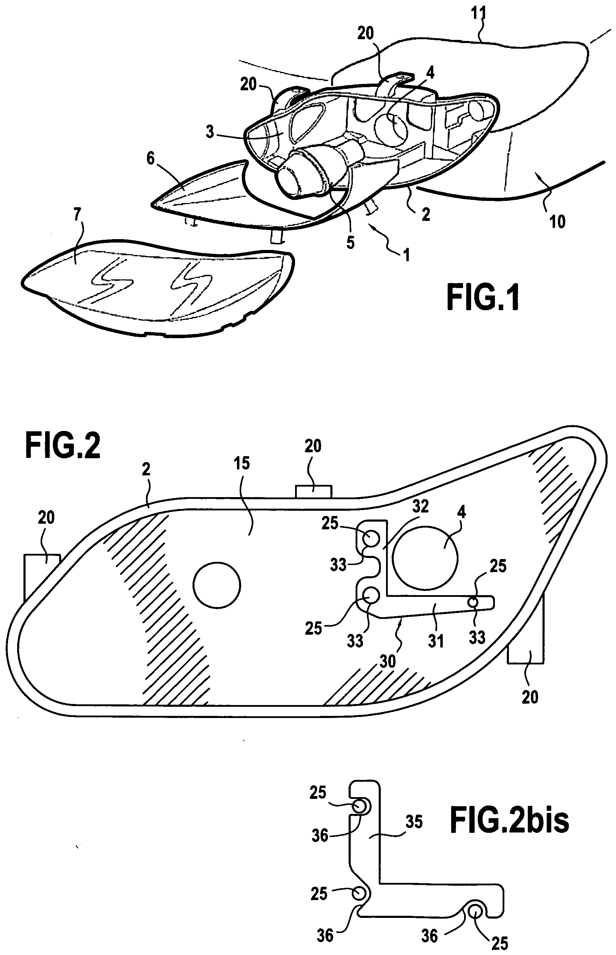

- la figure 2bis représente, schématiquement et partiellement, en vue de face, une variante de réalisation de la figure 2,

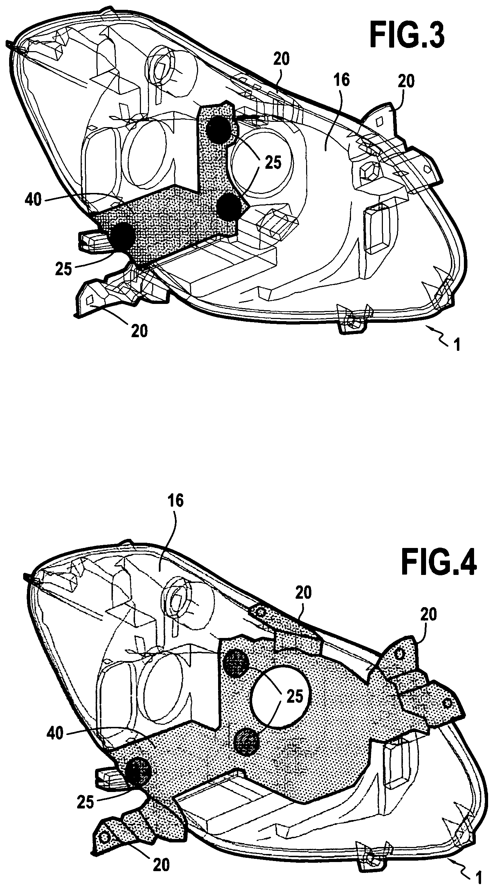

- la figure 3 représente, schématiquement et partiellement, en perspective, une vue de derrière du projecteur de la figure 1 selon une autre variante de réalisation,
- la figure 4 représente, schématiquement et partiellement, en perspective, une vue de derrière du projecteur de la figure 1 selon encore une autre variante de réalisation,
- la figure 6 représente, schématiquement et partiellement, en vue de face, le projecteur de la figure 1 selon un troisième exemple de mise en oeuvre de l'invention,

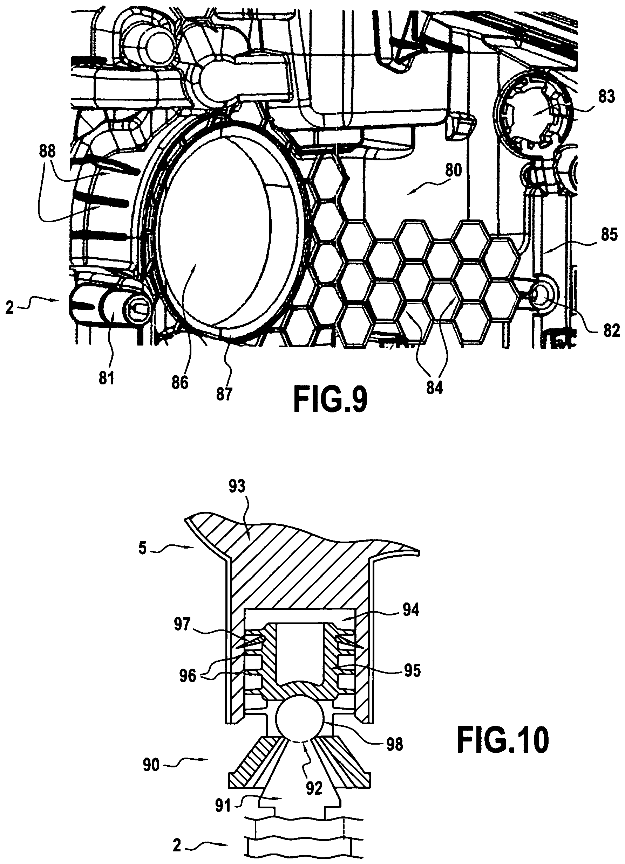

- la figure 9 représente, schématiquement et partiellement, l'intérieur du boîtier d'un projecteur selon un autre exemple de mise en oeuvre de l'invention, et
- la figure 10 représente, schématiquement et partiellement, différents éléments d'une liaison entre le module optique et le boîtier de la figure 9.

On a représenté sur la figure 1 un dispositif d'éclairage formant un projecteur 1 lumineux pour véhicule automobile.

Ce projecteur 1 comprend un boîtier 2 en plastique fixé à un châssis 11 du véhicule 10 via une première interface de montage comprenant des pattes de fixation 20 sur le boîtier 2 et des vis (non représentées) pour fixer ces pattes 20 sur dans des orifices (non représentés) du châssis 11.

Ce boîtier 2 comporte, d'une part, une ouverture 3, et d'autre part, un orifice 4 apte à recevoir partiellement un module optique 5 émettant un faisceau lumineux dirigé vers cette ouverture 3.

Pour cela, le module optique 5 comporte une lampe, un réflecteur et une lentille (non représentés).

Le faisceau lumineux est capable d'être représentatif d'une position d'éclairage du type code.

Le module optique 5 est fixé au boîtier 2 via une deuxième interface de montage comprenant, d'une part, des points de fixation 25 (représentés à la figure 2) agencés sur le boîtier 2, et d'autre part, des éléments (non représentés) du module optique 5.

Bien entendu, le boîtier peut comporter plusieurs modules optiques.

Le projecteur 1 comprend en outre de manière connue un masque 6 disposé dans le boîtier 2, sous le module optique 5, et une glace 7 fixée sur le boîtier 2 pour fermer de manière étanche l'ouverture 3.

On va maintenant décrire en référence à la figure 2 un premier exemple de mise en oeuvre d'un moyen selon l'invention, ce moyen étant agencé pour s'opposer à une dilatation thermique dans la deuxième interface de montage.

Dans l'exemple décrit, le projecteur 1 comporte une plaque 30 de rigidification sensiblement plane disposée contre une paroi intérieure 15 du boîtier 2.

Cette plaque 30 est réalisée dans un matériau présentant un coefficient de dilatation thermique sensiblement inférieur à celui du matériau des points de fixation 25, en plastique.

Par exemple, cette plaque 30 est réalisée en un matériau plastique thermodur.

La plaque 30 comporte deux branches 31 et 32 sensiblement perpendiculaires chacune dirigées à partir d'un point de fixation 25 commun vers un autre point de fixation 25 de la deuxième interface.

Ainsi, la plaque 30 s'étend entre les trois points de fixation 25 de la deuxième interface de montage.

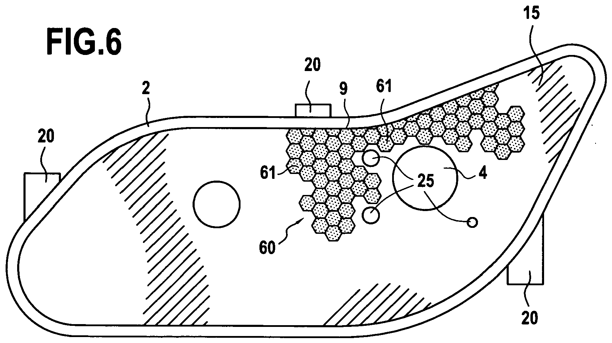

Chaque point de fixation 25 est formé par un trou apte à recevoir une vis de fixation, comme on le verra par la suite à la figure 5.

Si on le souhaite, un au moins des points de fixation peut être réglable pour déplacer le module optique à l'intérieur du boîtier de manière à régler la position du faisceau lumineux.

En outre, la plaque 30 est pourvue de trois orifices 33 formant chacun un passage pour la vis de fixation destinée à coopérer avec le trou configuré dans la deuxième interface de montage.

Cette plaque 30 est assemblée par vissage sur le boîtier 2.

En variante, la plaque peut être assemblée par collage ou surmoulage sur le boîtier.

La figure 2bis illustre une variante de réalisation de la plaque de rigidification de la figure 2.

Le projecteur de la figure 2bis comporte une plaque 35 de rigidification.

La plaque 35 de la figure 2bis présente la même configuration que la plaque 30 de la figure 2 sauf que, contrairement à cette plaque 30, la plaque 35 comporte un contour 36 agencé pour entourer partiellement les trois points de fixation 25.

Autrement dit, la plaque 35 ne comporte pas d'orifice formant un passage pour la vis de fixation destinée à coopérer avec le trou configuré dans la deuxième interface de montage.

On va maintenant décrire en référence à la figure 3 une autre variante de réalisation de la plaque de rigidification de la figure 2.

Le projecteur 1 de la figure 3 comporte une plaque 40 de rigidification.

La plaque 40 de la figure 3 présente la même configuration que la plaque 30 de la figure 2 sauf que, contrairement à cette plaque 30, la plaque 40 est disposée contre une paroi extérieure 16 du boîtier 2.

La figure 4 illustre encore une autre variante de réalisation de la plaque de rigidification de la figure 2.

Le projecteur de la figure 1 comporte une plaque 45 agencée en une seule pièce pour empêcher la dilatation thermique des deux interfaces de montage, contrairement à la plaque 30 de la figure 2.

Cette plaque 45 s'étend d'une part, entre les points de fixation 25 de la deuxième interface de montage, et d'autre part, à partir de chacun des points de fixation 25 jusqu'à chaque patte de fixation 20 de la première interface de montage.

Contrairement aux plaques 30, 35 et 40 des figures 2, 2bis et 3, la plaque 45 forme donc partiellement la première interface de montage via les trois pattes de fixation 20 et ainsi participe au montage du boîtier 2 sur le châssis 11 du véhicule 10.

La plaque 45 est assemblée par vissage sur le boîtier 2 et sur le châssis 11 du véhicule.

En variante, la plaque peut être assemblée par collage ou surmoulage sur le boîtier.

On va maintenant décrire en référence à la figure 6 un troisième exemple de mise en oeuvre d'un moyen selon l'invention, ce moyen étant agencé pour s'opposer à une dilatation thermique dans l'une au moins des interfaces de montage.

Le boîtier 2 comporte un ensemble de nervures 60 formant une structure alvéolée rigide, autrement dit un nid d'abeilles, contre sa paroi intérieure 15.

Les nervures 60, réalisées par surmoulage sur cette paroi 15 du boîtier 2, s'étendent entre et partiellement autour de deux points de fixation 25 de la deuxième interface de montage.

En outre, ces nervures 60 se prolongent vers un bord 9 du boîtier 2 en direction de la première interface de montage.

La structure alvéolée formée par les nervures 60 reçoit, par un procédé d'injection par expansion libre, un matériau 61 présentant un coefficient de dilatation sensiblement inférieur à celui des matériaux des points de fixation 25 et des pattes de fixation 20 pour former une zone de rigidification.

La figure 9 illustre un autre exemple de mise en oeuvre selon l'invention.

Selon cet exemple, le boîtier 2 comporte sur sa paroi intérieure 80 trois emplacements de liaison 81, 82 et 83, ces trois liaisons étant aptes à relier le module optique, non représenté ici, à la paroi intérieure 80 du boîtier 2.

Les trois emplacements de liaison 81, 82 et 83 définissent une zone géométrique triangulaire sur la paroi intérieure 80 du boîtier 2.

Plusieurs nervures de rigidification 84, par exemple formant une structure en nid d'abeille, s'étendent à l'intérieur de la zone triangulaire sur une portion seulement de cette zone.

En outre, le boîtier 2 comporte une nervure de rigidification supplémentaire 85, par exemple sensiblement rectiligne, plus grande que les autres nervures 84, aussi appelée renfort de caisson, qui s'étend entre les emplacements de liaison 82 et 83.

Le boîtier 2 comporte également une ouverture 86 agencée pour le passage d'une lampe du module optique.

Cette ouverture 86 est définie par un col 87 sur un côté duquel se raccordent d'autres nervures de rigidification 88.

On a représenté sur la figure 10 un exemple de liaison entre le module optique et le boîtier de la figure 9.

Comme on le voit sur cette figure 9, le module optique 5 est monté sur le boîtier 2 via un actionneur 90.

Cet actionneur 90 comporte une tige d'actionnement 91, laquelle comprend une tête de rotule 92.

Le réflecteur 93 du module optique 5 comprend une cavité 94 pour recevoir une capsule 95.

La capsule 95 comporte des lèvres 96 et une rondelle métallique 97, agencées pour maintenir à demeure la capsule 95 dans la cavité 94 du réflecteur 93 du module optique 5.

La capsule 95 comporte également un logement 98 agencé pour recevoir par encliquetage la tête de rotule 92 de la tige d'actionnement 91 de l'actionneur 90.

Ces différents éléments définissent une liaison rotule.

## Revendications

1. Dispositif d'éclairage (1), notamment un projecteur, pour véhicule automobile, le dispositif comportant:
- un boîtier (2) comprenant une première interface de montage apte à coopérer avec un élément du véhicule, le boîtier pouvant ainsi être fixé au véhicule via la première interface de montage,
- un module optique (5) comprenant une deuxième interface de montage coopérant avec au moins deux points de fixation du boîtier (25), le module optique (5) étant ainsi monté sur les au moins deux points de fixation (25) du boîtier via la deuxième interface de montage, le module optique étant apte à émettre un faisceau lumineux,
le dispositif (1) étant **caractérisé par le fait qu'**il comporte des moyens agencés pour s'opposer à une dilatation thermique d'au moins la deuxième interface, les moyens comportent au moins un organe de rigidification (30, 35, 40, 45):
- présentant un coefficient de dilatation sensiblement inférieur à celui d'un matériau d'au moins un élément de la deuxième interface ;
- étant disposée sur au moins une des faces extérieure (16) ou intérieure (15) du boîtier (2) et s'étendant entre les au moins deux points de fixation (25) de la deuxième interface de montage et/ou au moins partiellement autour des au moins deux points de fixation (25) de la deuxième interface de montage ;
l'organe de rigidification comportant au moins:
- une plaque (30, 35, 40, 45), et/ou
- un ensemble de nervures (60) assemblés sur le boîtier,

2. Dispositif (1) selon la revendication précédente, **caractérisé par le fait que** la plaque (45) est agencé, notamment en une seule pièce, pour s'opposer à la dilatation thermique des deux interfaces de montage, la plaque (45) s'étendant à partir des points de fixation (25) de la deuxième interface de montage jusqu'à au moins une patte de fixation (20) de la première interface de montage.

3. Dispositif (1) selon la revendication 1, **caractérisé par le fait que** l'organe de rigidification (45) forme au moins partiellement la première interface de montage (20) et ainsi participe au montage du boîtier (2) sur le véhicule (10).

4. Dispositif (1) selon l'une quelconque des revendications précédentes, **caractérisé par le fait que** le boîtier (2) comporte un ensemble de nervures (60) qui forme une structure alvéolée, autrement dit un nid d'abeilles.

## Patentansprüche

1. Beleuchtungsvorrichtung (1), insbesondere ein Scheinwerfer, für ein Kraftfahrzeug, wobei die Vorrichtung aufweist:
- ein Gehäuse (2), das eine erste Montageschnittstelle enthält, die geeignet ist, mit einem Element des Fahrzeugs zusammenzuwirken, wobei das Gehäuse so über die erste Montageschnittstelle am Fahrzeug befestigt werden kann,
- ein optisches Modul (5), das eine zweite Montageschnittstelle enthält, die mit mindestens zwei Befestigungspunkten des Gehäuses (25) zusammenwirkt, wobei das optische Modul (5) so mittels der zweiten Montageschnittstelle auf die mindestens zwei Befestigungspunkte (25) des Gehäuses montiert wird, wobei das optische Modul einen Lichtstrahl emittieren kann,
wobei die Vorrichtung (1) **dadurch gekennzeichnet ist, dass** sie Einrichtungen aufweist, die angeordnet sind, um einer thermischen Ausdehnung mindestens der zweiten Schnittstelle entgegenzuwirken, wobei die Einrichtungen mindestens ein Versteifungsorgan (30, 35, 40, 45) aufweisen:
- das einen Dehnungskoeffizienten im Wesentlichen niedriger als derjenige eines Materials mindestens eines Elements der zweiten Schnittstelle aufweist;
- das auf mindestens einer der Außen- (16) oder Innenseiten (15) des Gehäuses (2) angeordnet ist und sich zwischen den mindestens zwei Befestigungspunkten (25) der zweiten Montageschnittstelle und/oder mindestens teilweise um die mindestens zwei Befestigungspunkte (25) der zweiten Montageschnittstelle herum erstreckt; wobei das Versteifungsorgan mindestens aufweist:
- eine Platte (30, 35, 40, 45), und/oder
- eine Einheit von Rippen (60), die auf das Gehäuse montiert sind.

2. Vorrichtung (1) nach dem vorhergehenden Anspruch, **dadurch gekennzeichnet, dass** die Platte (45), insbesondere aus einem Stück, angeordnet ist, um der thermischen Ausdehnung der zwei Montageschnittstellen entgegenzuwirken, wobei die Platte (45) sich ausgehend von den Befestigungspunkten (25) der zweiten Montageschnittstelle bis zu mindestens einer Befestigungslasche (20) der ersten Montageschnittstelle erstreckt.

3. Vorrichtung (1) nach Anspruch 1, **dadurch gekennzeichnet, dass** das Versteifungsorgan (45) zumindest teilweise die erste Montageschnittstelle (20) bildet und so an der Montage des Gehäuses (2) auf das Fahrzeug (10) beteiligt ist.

4. Vorrichtung (1) nach einem der vorhergehenden Ansprüche, **dadurch gekennzeichnet, dass** das Gehäuse (2) eine Einheit von Rippen (60) aufweist, die eine wabenartige Struktur bildet, anders gesagt ein Waffelmuster.

## Claims

1. Lighting device (1), notably a headlight, for a motor vehicle, the device comprising:
- a housing (2) comprising a first mounting interface capable of cooperating with an element of the vehicle, the housing thus being able to be fixed to the vehicle via the first mounting interface,
- an optical module (5) comprising a second mounting interface cooperating with at least two fixing points of the housing (25), the optical module (5) being thus mounted on the at least two fixing points (25) of the housing via the second mounting interface, the optical module being capable of emitting a light beam,
the device (1) being **characterized in that** it comprises means arranged to oppose a thermal expansion of at least the second interface, the means comprise at least one stiffening member (30, 35, 40, 45):
- exhibiting a coefficient of expansion substantially lower than that of a material of at least one element of the second interface;
- being arranged on at least one of the outer (16) or inner (15) faces of the housing (2) and extending between the at least two fixing points (25) of the second mounting interface and/or at least partially around the at least two fixing points (25) of the second mounting interface;
the stiffening member comprising at least:
- one plate (30, 35, 40, 45), and/or
- one set of ribs (60) assembled on the housing.

2. Device (1) according to the preceding claim, **characterized in that** the plate (45) is arranged, notably in a single piece, to oppose the thermal expansion of the two mounting interfaces, the plate (45) extending from the fixing points (25) of the second mounting interface to at least one fixing lug (20) of the first mounting interface.

3. Device (1) according to Claim 1, **characterized in that** the stiffening member (45) at least partially forms the first mounting interface (20) and thus participates in the mounting of the housing (2) on the vehicle (10).

4. Device (1) according to any one of the preceding claims, **characterized in that** the housing (2) comprises a set of ribs (60) which forms a cellular structure, in other word a honeycomb.
